(19) Europäisches Patentamt
European Patent Office
Office européen des brevets

(11) Numéro de publication: **0 346 235**
**A1**

(12) **DEMANDE DE BREVET EUROPEEN**

(21) Numéro de dépôt: **89401595.7**

(51) Int. Cl.4: **C 07 F 9/65**

(22) Date de dépôt: **09.06.89**

(30) Priorité: **10.06.88 FR 8807742**

(43) Date de publication de la demande:
**13.12.89 Bulletin 89/50**

(84) Etats contractants désignés:
**AT BE CH DE ES FR GB GR IT LI LU NL SE**

(71) Demandeur: **ADIR ET COMPAGNIE**
**22, rue Garnier**
**F-92201 Neuilly sur Seine (FR)**

(72) Inventeur: **Lavielle, Gilbert**
**1 Avenue Lilly**
**F-78170 La Celle Saint Cloud (FR)**

**Hautefaye, Patrick**
**9 Rue du Pré aux Moutons**
**F-77170 Servon Brie Comte Robert (FR)**

(54) **Nouveau procédé de préparation de dérivés N-(vinblastinoyl-23) d'acide amino-1 méthylphosphonique.**

(57) L'invention concerne un nouveau procédé de préparation des dérivés de formule I

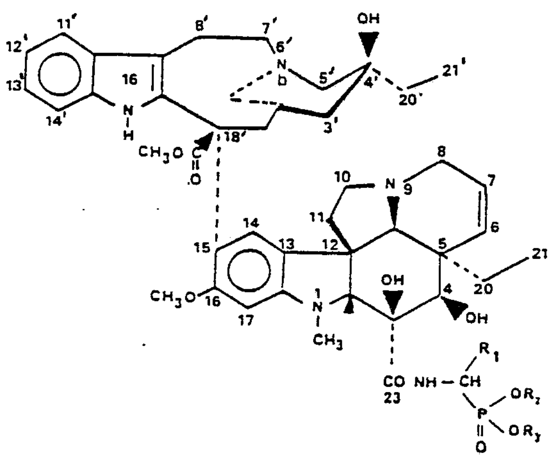

(I)

dans laquelle :
- $R_1$ représente un atome d'hydrogène, un radical alkyle, un radical alkylène, un radical arylalkyle éventuellement substitué sur le cycle aromatique par un atome d'halogène un radical hydroxyle ou un radical alkyle ou alcoxy, un radical indolyl-2 méthyle, un radical imidazolyl-4 méthyle, ou un radical alcoxy-carbonylméthyle, et
- $R_2$ et $R_3$ identiques ou différents représentent chacun un radical alkyle,

caractérisé en ce que l'on condense l'acide vinblastinoïque avec le N,N'-carbonyldiimidazole à température ambiante, dans un solvant polaire anhydre sous atmosphère inerte puis, que l'on fait réagir dans le milieu réactionnel un aminophosphonate de formule suivante :

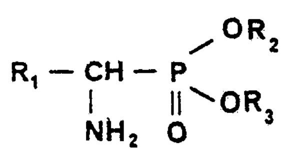

dans laquelle $R_1$, $R_2$ et $R_3$ ont la même signification que celle indiquée dans la formule I, et ensuite, que l'on hydrolyse le milieu à l'eau et que l'on extrait les composés attendus, à l'aide d'un hydrocarbure chloré.

EP 0 346 235 A1

## Description

## NOUVEAU PROCEDE DE PREPARATION DE DERIVES N-(VINBLASTINOYL-23) D'ACIDE AMINO-1 METHYLPHOSPHONIQUE

La présente invention concerne un nouveau procédé de préparation de dérivés N-(vinblastinoyl-23) d'acide amino-1 méthylphosphonique.

Certains dérivés N-(vinblastinoyl-23) d'acide amino-1 méthylphosphonique sont décrits dans la demande de brevet français N°87.16327. Les composés revendiqués possèdent une activité antitumorale très supérieure à tous les dérivés de vinblastine connus. Selon le procédé de préparation décrit dans la demande dénommée ci-dessus, les dérivés bis-indoliques sont obtenus par condensation des aminophosphonates appropriés avec le descarbométhoxy-3 désacétyl-0-4 vinblastine carboxazide-3. Cet azide est préparé à partir de la vinblastine par hydrazynolyse et ensuite nitrosation, ce qui nécessite l'utilisation d'hydrazine anhydre, réactif très dangereux et toxique.

Le brevet belge N°904.064 décrit un procédé de préparation de certains dérivés N-(vinblastinoyl-23) d'acides aminés et peptides par la méthode aux anhydrides mixtes. Cependant, ce procédé est industriellement peu intéressant, parce qu'il nécessite au moins deux étapes de préparation distinctes.

La demanderesse a maintenant découvert un nouveau procédé de préparation de dérivés N-(vinblastinoyl-23) d'acide amino-1 méthylphosphonique très avantageux en regard des procédés déjà connus.

En effet, ce procédé permet l'obtention des dérivés de formule générale I à partir de l'acide vinblastinoïque en une seule étape avec de bon rendements, et les réactifs utilisés sont commerciaux, peu onéreux et simples à manipuler.

L'invention a plus précisément pour objet un procédé de préparation des dérivés de formule générale I,

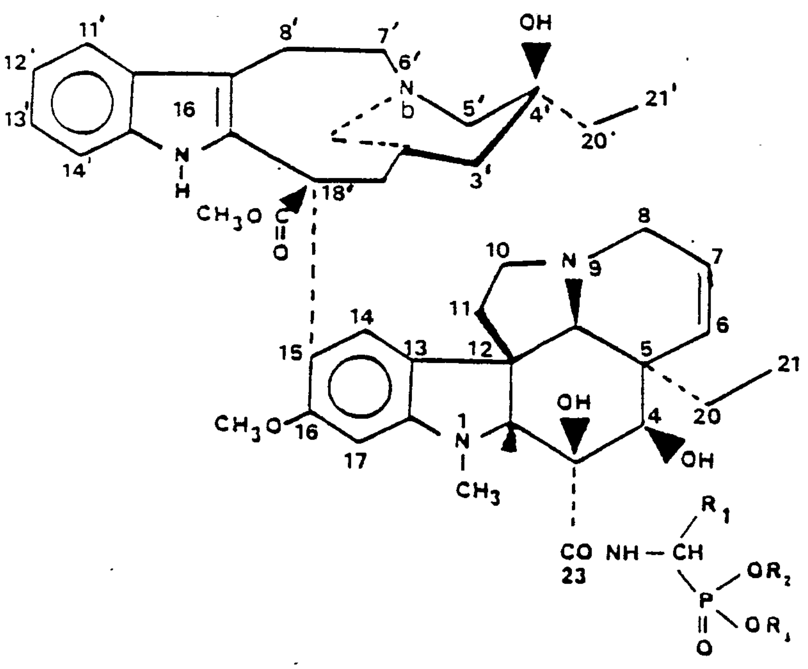

(I)

dans laquelle :

- $R_1$ représente un atome d'hydrogène, un radical alkyle linéaire ou ramifié renfermant de 1 à 6 atomes de carbone, un radical alkylène linéaire ou ramifié renfermant de 1 à 6 atomes de carbone, un radical arylalkyle de 7 à 10 atomes de carbone pouvant porter comme substituant sur le cycle aromatique un atome d'halogène, un radical hydroxyle ou un radical alkyle ou alcoxy renfermant chacun de 1 à 5 atomes de carbone, un radical indolyl-2 méthyle, un radical imidazolyl-4 méthyle, ou un radical alcoxycarbonylméthyle renfermant de 3 à 11 atomes de carbone, et
- $R_2$ et $R_3$ identiques ou différents représentent chacun un radical alkyle linéaire ou ramifié renfermant de 1 à 6 atomes de carbone,

caractérisé en ce que l'on condense l'acide vinblastinoïque, composé de formule II

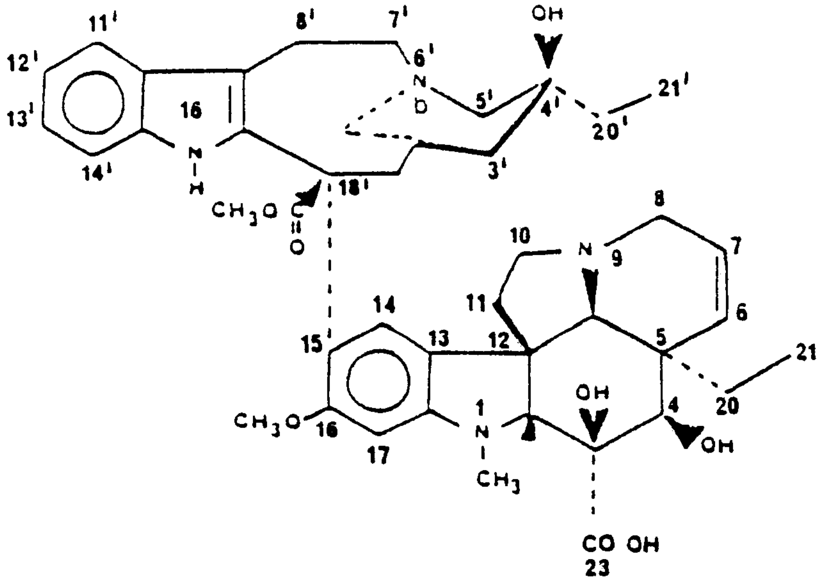

(II)

avec le N,N′-carbonyldiimidazole, composé de formule III :

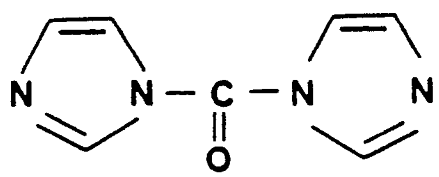

(III)

à température ambiante, dans un solvant polaire anhydre tel que le diméthylformamide et sous atmosphère inerte puis, que l'on fait réagir dans le milieu réactionnel un aminophosphonate de formule générale IV :

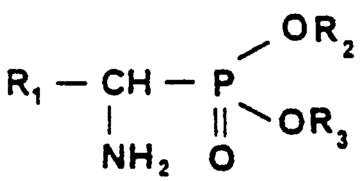

(IV)

dans laquelle $R_1$, $R_2$ et $R_3$ ont la même signification que celle indiquée dans la formule I,
et ensuite,
que l'on hydrolyse le milieu à l'eau distillée et
que l'on extrait les composés attendus de formule générale I, à l'aide d'un hydrocarbure chloré tel que le dichlorométhane.

L'acide vinblastinoïque, composé de formule II, peut être préparé selon la méthode décrite dans la demande de brevet français N°75.31159.

Le N,N′-carbonyldiimidazole est un produit commercial (Aldrich ®).

Les composés de formule générale IV sont préparés selon les méthodes décrites dans la demande de brevet français N°87.16327.

Selon le procédé de l'invention, les composés de formule I sont obtenus sous forme de bases libres.

Pour former les sels d'addition des composés de formule générale I, on peut utiliser des acides organiques ou minéraux pharmaceutiquement acceptables. Parmi ces acides, on peut citer les acides chlorhydrique, phosphorique, fumarique, citrique, oxalique, sulfurique, tartrique, maléïque, méthanesulfonique etc...

Les exemples suivants, donnés à titre non-limitatif, illustrent l'invention.

Les points de fusion indiqués sont mesurés selon la technique micro-Kofler.

Les spectres de masse (F.A.B.$^+$ et F.A.B.$^-$) sont obtenus avec un spectromètre de masse à filtre quadripolaire, NERMAG ® 10-10C.
Matrice : mélange glycérol et thioglycérol (50V/50V).
Gaz incident : Krypton
Energie : 6 à 8 kev.

## EXEMPLE 1

**N-(désacétyl-0-4 vinblastinoyl-23) aminométhylphosphonate de diéthyle**

A une solution de 100 mg d'acide vinblastinoïque dans 5 ml de diméthylformamide anhydre, on ajoute sous argon 85 mg de N,N′-carbonyldiimidazole. On agite une heure à température ambiante avant d'ajouter une

solution de 100 mg d'aminométhyl phosphonate de diéthyle dans 1 ml de diméthylformamide anhydre. On maintient sous agitation à température ambiante et sous argon pendant 24 heures. On hydrolyse le milieu à l'aide de 25 ml d'eau distillée et on extrait le produit à l'aide de 3 fois 25 ml de dichlorométhane. On réunit les phases organiques, on les lave une fois à l'eau salée, une fois à l'eau et on les sèche sur sulfate de magnésium anhydre.

Après évaporation du solvant, le résidu est purifié par chromatographie sur colonne en utilisant comme phase stationnaire 170 g de Lichrosorb RP 18 (Merck ®) et comme solvant d'élution un mélange de méthanol et de phosphate disodique 0,01 M (70:30 v/v).

Rendement : 50%.

Le sulfate de N-(désacétyl-0-4 vinblastinoyl-23) aminométhylphosphonate de diéthyle a été obtenu après addition d'éthanol sulfurique à 2%.

Point de fusion : 194-204°C (décomposition).

Spectre de masse, $FAB^+$ (m/z) 904 (M+1),651,562,550, 355.

## EXEMPLE 2

**N-(désacétyl-0-4 vinblastinoyl-23) amino-1 méthyl-2 propyl phosphonate de diéthyle**

Ce composé a été préparé selon le procédé décrit dans l'exemple 1 mais en utilisant l'amino-1 méthyl-2 propyl phosphonate de diéthyl au lieu d'aminométhylphosphonate de diéthyle.

Le produit issu de la réaction a été purifié après évaporation du solvant sur colonne chromatographique en utilisant comme phase stationnaire de la silice (230-400 Mesh) et comme solvant d'élution un mélange de toluène et d'éthanol.

Rendement : 35%

Spectre de masse $FAB^+$ (m/z) : 946 (M+1), 709, 651.

Spectre de masse $FAB^-$ (m/z) : 944 (M-1), 926,916,806, 180,152,137,108.

## Revendications

**1.** Procédé de préparation des dérivés de formule générale I

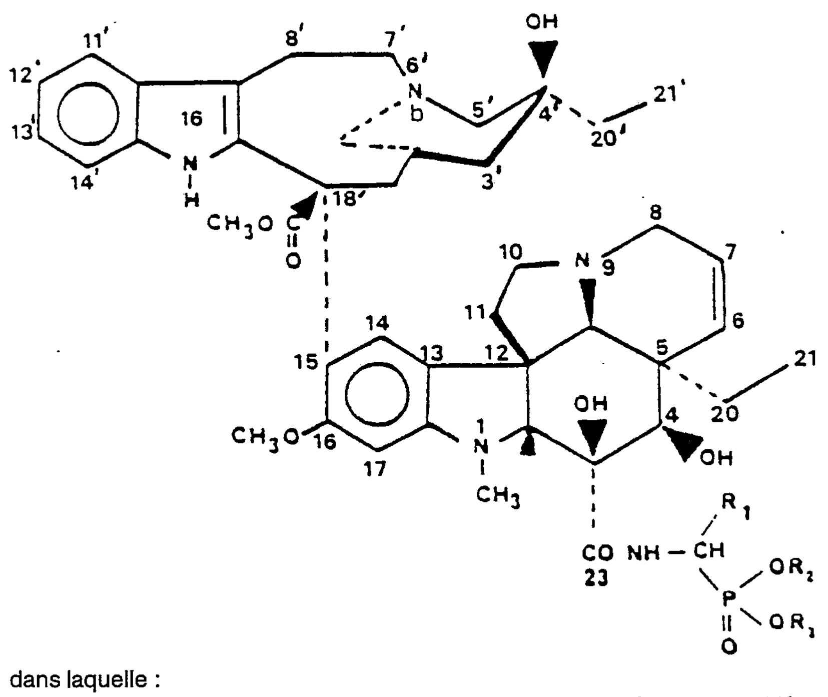

(I)

dans laquelle :

- $R_1$ représente un atome d'hydrogène, un radical alkyle linéaire ou ramifié renfermant de 1 à 6 atomes de carbone, un radical alkylène linéaire ou ramifié renfermant de 1 à 6 atomes de carbone, un radical arylalkyle de 7 à 10 atomes de carbone pouvant porter comme substituant sur le cycle aromatique un atome d'halogène, un radical hydroxyle ou un radical alkyle ou alcoxy renfermant chacun de 1 à 5 atomes de carbone, un radical indolyl-2 méthyle, un radical imidazolyl-4 méthyle, ou un radical alcoxycarbonylméthyle renfermant de 3 à 11 atomes de carbone, et
- $R_2$ et $R_3$ identiques ou différents représentent chacun un radical alkyle linéaire ou ramifié renfermant de 1 à 6 atomes de carbone,

caractérisé en ce que l'on condense l'acide vinblastinoïque, composé de formule II

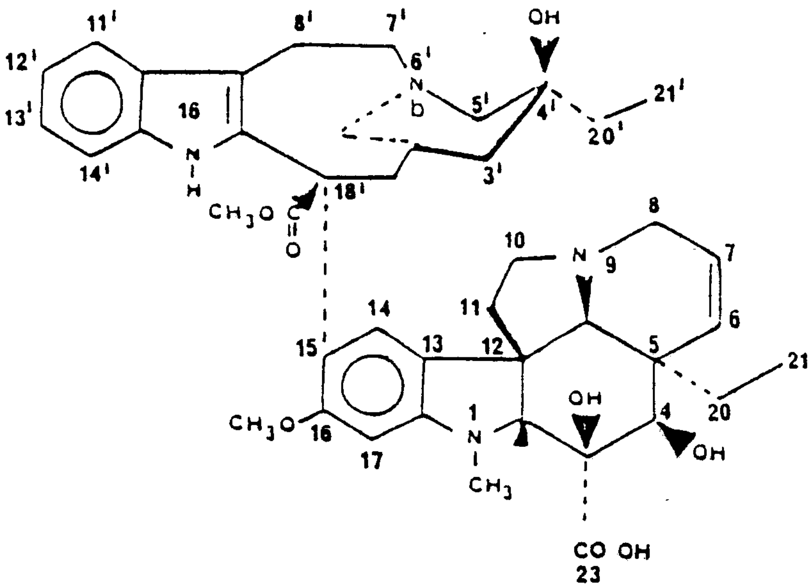

(II)

avec le N,N′-carbonyldiimidazole, composé de formule III :

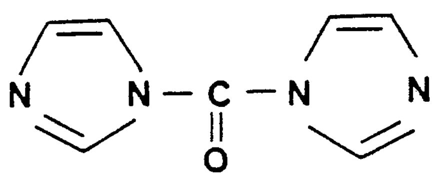

(III)

à température ambiante, dans un solvant polaire anhydre et sous atmosphère inerte puis, que l'on fait réagir dans le milieu réactionnel un aminophosphonate de formule générale IV :

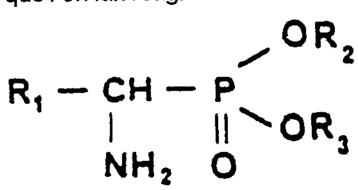

(IV)

dans laquelle $R_1$, $R_2$ et $R_3$ ont la même signification que celle indiquée dans la formule I,
et ensuite,
que l'on hydrolyse le milieu à l'eau distillée et
que l'on extrait les composés attendus de formule générale I, à l'aide d'un hydrocarbure chloré.

**2.** Procédé selon la revendication 1 caractérisé en ce que la condensation d'acide vinblastinoïque avec le N,N′-carbonyl diimidazole et un aminophosphonate de formule générale IV, selon la revendication 1, est réalisée sous atmosphère inerte en présence d'argon.

**3.** Procédé selon la revendication 1 caractérisé en ce que la condensation d'acide vinblastinoïque avec le N,N′-carbonyl diimidazole et un aminophosphonate de formule générale IV, selon la revendication 1, est realisée en une seule étape.

**4.** Procédé selon la revendication 1 caractérisé en ce que la condensation d'acide vinblastinoïque avec le N,N′-carbonyl diimidazole et un aminophosphonate de formule générale IV, selon la revendication 1, est réalisée dans le diméthylformamide.

Office européen des brevets

# RAPPORT DE RECHERCHE EUROPEENNE

Numero de la demande

EP 89 40 1595

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | "THE MERCK INDEX", An Encyclopedia of Chemicals, Drugs, and Biologicals, édition 10, édité par Martha Windholz et al., 1983, page 253, no. 1802, Merck & Co., Inc., Rahway, N.J., US; "N,N'-Carbonyldiimidazole" * Résumé no. 1802 * | 1-4 | C 07 F 9/65 |
| Y | EP-A-0 047 323 (FUJISAWA PHARMACEUTICAL CO.) * Page 13, ligne 21 - page 15, ligne 4; page 47, exemple 9 * | 1-4 | |
| D,P Y | EP-A-0 318 392 (ADIR ET COMPAGNIE) * Revendications * | 1-4 | |
| | | | DOMAINES TECHNIQUES RECHERCHES (Int. Cl.4) |
| | | | C 07 F 9/00 |

Le présent rapport a été établi pour toutes les revendications

| Lieu de la recherche | Date d'achèvement de la recherche | Examinateur |
|---|---|---|
| LA HAYE | 28-08-1989 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)